# EUROPÄISCHE PATENTSCHRIFT

(11) **EP 2 892 357 B1**
(45) Veröffentlichungstag und Bekanntmachung des Hinweises auf die Patenterteilung: **14.03.2018**
(21) Anmeldenummer: 13745688.5
(22) Anmeldetag: 08.08.2013
(51) Int. Cl.: A23B 4/005, A23B 4/01, A23B 4/033, A23B 4/06, A23B 4/22, A23L 3/015, A23L 3/12, A23L 3/3463, A23L 3/36, A23B 4/16, A23L 3/3418, A23L 3/3427, A22C 7/00

(54) **VERFAHREN ZUR ERHÖHUNG DER PRODUKTQUALITÄT UND PRODUKTSICHERHEIT VON FLEISCH ODER LEBENSMITTELN TIERISCHEN ODER PFLANZLICHEN URSPRUNGS**
METHOD FOR ENHANCING THE PRODUCT QUALITY AND PRODUCT SAFETY OF MEAT OR FOODSTUFFS OF ANIMAL OR VEGETABLE ORIGIN
PROCÉDÉ POUR AUGMENTER LA QUALITÉ ET LA SÉCURITÉ DE PRODUITS DE VIANDE OU DE PRODUITS ALIMENTAIRES D'ORIGINE ANIMALE OU VÉGÉTALE

(30) Priorität: 04.09.2012 DE 102012108204; 08.04.2013 DE 102013006050; 06.05.2013 DE 102013007786; 28.05.2013 DE 102013009032
(43) Veröffentlichungstag der Anmeldung: 15.07.2015
(73) Patentinhaber: Deutsches Institut für Lebensmitteltechnik e.V., 49610 Quakenbrück (DE); Triton GmbH, 14089 Berlin (DE)
(72) Erfinder: HEINZ, Volker, 49610 Quakenbrück (DE); KORTSCHACK, Fritz, 14089 Berlin (DE)
(74) Vertreter: Kruspig, Volkmar
(86) Internationale Anmeldenummer: PCT/EP2013/066597
(87) Internationale Veröffentlichungsnummer: WO 2014/037180

(56) Entgegenhaltungen:
- WO-A2-01/89308
- WO-A2-2004/019690
- WO-A2-2006/132922
- DE-A1- 10 245 603
- DE-A1-102005 011 868
- DE-A1-102008 004 242

## Beschreibung

Die Erfindung betrifft ein Verfahren zur Erhöhung der Produktqualität und Produktsicherheit von Fleisch oder Lebensmitteln tierischen oder pflanzlichen Ursprungs mittels gezielter Druck- und Temperaturbehandlung gemäß Patentanspruch 1.

Wie z.B. in der DE 102 45 603 A1 oder WO 2004/019690 herausgestellt, wird bei der Fleischbearbeitung auf eine maximale Genussfähigkeit bei gleichzeitig sehr langer Haltbarkeit des Fleischprodukts abgestellt. Diesbezüglich zeigt die DE 102 45 603 A1 und die WO 2004/019690 ein Verfahren zur Reifung von Fleisch, wobei zunächst ein Entbeinen von Schlachttierkörpern im warmen Zustand und das Zerteilen der entbeinten Schlachttierkörper zu Portionseinheiten erfolgt. Die Portionseinheiten werden dann verpackt und es erfolgt eine Kühlung unter definierten Bedingungen. Erfindungsgemäß findet die dortige Verpackung der Portionseinheiten unter Anwendung eines äußeren Drucks, insbesondere einen Flüssigkeitsdrucks, mittels einer Folie oder einer Membran statt, und zwar derart, dass die Portionseinheiten jeweils möglichst lufteinschlussfrei eng umschlossen sind. Das Kühlen und/oder gegebenenfalls ein Gefrieren wird im Flüssigkeits- und/oder Solebad unter Nutzung eines Kältefluids durchgeführt.

Mit dem vorgestellten Verfahren kann der Effekt des sogenannten Cold-Shortening, d.h. die Kältekontraktion, oder ein Hot-Shortening, d.h. die Rigor-Kontraktion verhindert bzw. reduziert werden. Es ist dadurch möglich, der bis zum Eintritt des Rigor mortis möglichen Muskelverkürzung entgegenzuwirken.

Diesbezüglich kann auch eine mechanische Beeinflussung durch Aufbringen von Druck auf die Produktoberfläche des Behandlungsgutes vorgenommen werden.

Es zeigt in diesem Sinne die DE 39 08 585 C2 eine elastische Umhüllung zum Formen von Fleisch in eine annähernd runde Form, wobei die Umhüllung als Verpackungsbeutel oder Verpackungsschlauch ausgebildet ist, der das Fleisch in die vorerwähnte runde Form zwingt. Der diesbezüglich bevorzugt eingesetzte Schlauch oder Beutel ist in seinem Querschnitt elastisch ausgebildet, wobei das Material des Schlauches sich durch eine äußere Krafteinwirkung gummiartig dehnt und nach Beendigung der äußeren Krafteinwirkung von allein in seinen Urzustand zurückgeht. Die elastische radiale Dehnbarkeit beträgt etwa 50% des Schlauchumfanges im Querschnitt und eine eventuelle Längsdehnung etwa 25%. Unter Anwendung der elastischen Umhüllung offenbart die DE 39 08 585 C2 ein Verfahren zum Formen von Fleisch mit Hilfe der Umhüllung, die über ein Rohr gezogen wird und beim Durchschieben des Fleisches sich um das Fleisch legt, um die gewünschte runde Form zu erreichen. Ein entsprechender Schlauch oder Beutel ist dann an den Enden mit Hilfe eines Folienüberschusses verschweißbar. Ausgestaltend kann dem Schlauch oder der Beutel nach Einfüllen des Fleisches die Luft entzogen werden, d.h. ein Vakuumieren erfolgen.

Darüber hinaus ist es bekannt, durch Aufbringung von Zugkräften parallel zum Faserverlauf des Fleisches eine Muskelverkürzung zu vermindern. Diese Methode wird angewendet, indem Tierkörperhälften hängend bis zum Eintritt des Rigor mortis gekühlt gelagert werden.

Es hat sich jedoch gezeigt, dass die vorstehend kurz umrissenen Verfahren nur bei bestimmten Produkten zu reproduzierbaren Eigenschaften führen und in vielen Fällen das gewünschte Qualitätsniveau nicht erreichbar ist. Bei bekannten Technologien erforderliche Umverpackungen oder aber auch der Transport zwischen bzw. zu verschiedenen Behandlungsvorrichtungen führt zu einer nicht gänzlich auszuschließenden höheren Keimbelastung, was wiederum ein Problem für die Produktsicherheit darstellt.

Aus dem Vorgenannten ist es daher Aufgabe der Erfindung, ein weiterentwickeltes Verfahren zur Erhöhung der Produktqualität und Produktsicherheit von Fleisch oder Lebensmitteln tierischen oder pflanzlichen Ursprungs anzugeben, wobei auf eine gezielte Druck- und gleichzeitige Temperaturbehandlung zurückgegriffen wird. Insbesondere soll das Verfahren zur Anwendung auch von solchen Produkten dienen, die ungleichmäßig geformt oder gewachsen sind, wie z. B. auch Tierhälften, Tierviertel oder kleinere Einheiten mit oder ohne Knochen, oder und die es gilt, in der ursprünglichen Form zu stabilisieren oder zu erhalten.

Die Lösung der Aufgabe der Erfindung erfolgt durch ein Verfahren zur Erhöhung der Produktqualität und Produktsicherheit von Fleisch oder Lebensmitteln tierischen oder pflanzlichen Ursprungs gemäß der Lehre nach Patentanspruch 1, wobei die Unteransprüche mindestens zweckmäßige Ausgestaltungen und Weiterbildungen darstellen.

Bezüglich bestimmter Unteransprüche finden sich Weiterbildungen des Verfahrens, gerichtet auf die Frischfleischbehandlung, die Behandlung von Lebensmitteln tierischen oder pflanzlichen Ursprungs, aber auch die Behandlung von Rohwurst tierischen oder pflanzlichen Ursprungs.

Das Verfahren zur Erhöhung der Produktqualität und Produktsicherheit von Fleisch oder Lebensmitteln tierischen oder pflanzlichen Ursprungs umfasst die nachfolgend erläuterten grundlegenden Schritte.

Grundsätzlich können ganze, halbe, geviertelte oder auch kleinere Teile von Tierkörpern mit und ohne Knochen verpackt aber auch unverpackt der erfindungsgemäßen kombinierten Temperatur- und Druckbehandlung unterzogen werden. Eine Behandlung unverpackter Tierkörper bietet sich dann an, wenn die behandelten Teile anschließend einer weiteren Zerlegung unterzogen werden, aber zuvor durch die kombinierte Druck- und Temperaturbehandlung der Zartheitsgrad erhöht und der Warmfleischeffekt für Rohmaterialien zur Produktion von Wurst- und Fleischwaren quasi konserviert werden soll.

Für die Gewinnung von Vorratspackungen bzw. Endverbraucherpackungen erfolgt zunächst ein portioniertes Verpacken von Frisch- oder Warmfleisch beliebiger Form unter Nutzung eines Folienbehältnisses. Das Folienbehältnis verfügt über Rückstellkräfte, so dass aus dem verpackten Gut extrem geringe Mengen an Flüssigkeiten austreten und sich diese geringen Mengen über die gesamte Oberfläche des Gutes verteilen und nicht einer Konzentration oder Flüssigkeitssammlung an bestimmten Punkten unterliegen.

Eine vorgegebene Menge der verpackten Portionen wird dann in eine behältnisartige Behandlungsvorrichtung eingebracht, z.B. dort gestapelt.

An den mit dem Behandlungsgut in Kontakt gelangenden Flächen weist die behältnisartige Behandlungsvorrichtung z. B. eine Vielzahl von mit einem Druck- und Temperaturmedium beaufschlagbaren Kissen, Schläuchen oder dergleichen elastischen Gebilden auf. Unverpacktes Gut kann durch eine Trennfolie zu den in Kontakt gelangenden Flächen vor einer möglichen Kontamination geschützt werden.

Alternativ können die Gebilde nicht wie bei Kissen oder Schläuchen formfrei, sondern auch formgebend ausgeführt werden. Dabei können die Gebilde durch starre Materialien ausgebildet als Formen mit Deckel realisiert werden. Hier besteht die Möglichkeit, eine gewünschte Geometrie auch für Frischfleisch zu erzielen, wobei das Fleisch gepresst und bei temperierten Druckmitteln temperaturbeaufschlagt wird, wobei die thermische Energie auf das gepresste Fleisch im Sinne einer Kühlung oder Erhitzung übertragen wird.

Wenn feste Unterformen zum Einsatz kommen, können diese gefedert gelagerte Einzelstempel oder viele flächenmäßig kleine Stempel umfassen, die sich der Kontur des Behandlungsgutes anpassen und so den Druck übertragen. Zum Heizen oder Kühlen können ergänzend Peltierelemente zum Einsatz kommen.

Im nächsten Schritt wird ein Füllen der formgebenden, formunterstützenden oder formfreien Gebilde mit dem Druck- und Temperiermedium derart vorgenommen, dass auf das verpackte Gut im Wesentlichen gleichmäßige Druckkräfte einwirken. Darüber hinaus wird das Gut in einem vorgegebenen Temperaturbereich gehalten, der bei einer bevorzugten Ausführungsform zwischen ca. 14°C und 16°C liegt.

Die Temperierung erfolgt über ein vorbestimmtes bzw. durch den pH-Wert Verlauf ermitteltes Zeitfenster, insbesondere bis zum Eintritt der Muskelstarre.

Die Temperierung des Warmfleisches kann alternativ auch über einen temperierten Luft- oder Wasserstrom vorgenommen werden, wobei erfindungsgemäß im Mittelpunkt eine quasi parallele Temperierung und Druckbehandlung steht, um einen optimalen Zartheitsgrad für Brat- bzw. Kochfleisch und Erhalt der Warmfleischeigenschaft für Verarbeitungsfleisch von allen Fleischgattungen, wie Rind, Schwein, Hammel, Pute usw. zu erreichen.

Nach Ablauf des vorbestimmten / ermittelten Zeitfensters wird dann ein schnelles Kühlen des verpackten Gutes vorgenommen, und zwar in erfindungsgemäßer Weise über einen Austausch des Temperiermediums. Ein Umverpacken bzw. eine

Änderung der Position des Behandlungsgutes in der behältnisartigen Behandlungsvorrichtung ist nicht erforderlich.

In einer bevorzugten Ausgestaltung der Erfindung kann dem verpackten Gut über die Innenbeschichtung des Folienbehälters oder dem zu verpackenden Gut ein oxidationshemmender bzw. antimikrobiell wirkender Stoff zugegeben werden. Dieser Stoff kann z.B. Rosmarinextrakt sein.

Um eine Keimbelastung zu minimieren, kann das jeweilige Folienbehältnis über eine antimikrobielle Beschichtung oder eine entsprechende Oberfläche verfügen.

Ergänzend besteht die Möglichkeit einer Zugabe oder einer Begasung mittels CO₂. Diese CO₂-Zugabe schränkt die Lebensbedingungen unerwünschter Mikroorganismen ein, und zwar aufgrund der Tatsache, dass sich bei einer solchen Behandlung ein saures Milieu auf der Produktoberfläche ergibt. CO₂ diffundiert entweder durch das Folienbehältnis hindurch bzw. geht mit der Produktflüssigkeit in Lösung über. Aufgrund der vorteilhaften Rückstelleigenschaften des Folienbehältnisses passt sich das Folienmaterial auch nach einem Begasungsvorgang mit CO₂ der Produktoberfläche wieder an.

Das Zusammentreffen einer CO₂-Beaufschlagung oder -Begasung und höheren Temperaturen gemäß der gewünschten Behandlung verbessert die Wirkung der oxidationshemmenden Zugaben.

Bei der Behandlung von Warmfleisch wird das vorbestimmte / ermittelte Zeitfenster der Temperaturbehandlung bis zum Eintreten der Muskelstarre gehalten.
Bei Weiterverarbeitung des nach der vorstehenden Beschreibung gewonnenen Rohstoffs zu Wurst- und Fleischwaren, kann auf die Zugabe feuchtigkeitsbindender Stoffe, wie z. B. Phosphat oder Milcheiweiß verzichtet werden, da durch die Druck/Temperaturbehandlung über den Zeitpunkt bis zum Eintritt des Rigor mortis hinaus der Warmfleischeffekt erhalten bleibt.

Bei der Herstellung von Wurst- und Fleischwaren, welche über eine definierte Form verfügen sollen, sind die Kissen, Schläuche oder dergleichen elastische Gebilde auf der dem Behandlungsgut zugewandten Seite mit Formflächen versehen, die eine gewünschte Starrheit besitzen, um das Behandlungsgut in eine von den Formflächen bestimmte Gestalt zu überführen.

Die Formflächen können ergänzend zum Einwirken thermischer Energie auf das Behandlungsgut ausgebildet sein. Hier ist insbesondere an eine solche Ausgestaltung gedacht, die eine Erzeugung ohmscher Wärme ermöglicht.

Bei der Rohwurstherstellung wird der vorgegebene Temperaturbereich in Temperaturhöhe und Zeitdauer auf den Trocknungs- und Reifeprozess des Produkts abgestellt.

Die Trocknung des Behandlungsguts kann hier unter Einsatz von Adsorbentien erfolgen und diesbezüglich das Ausgangsprodukt in einem gasdurchlässigen Folienbehältnis oder unverpackt vorliegen.

Die behältnisartige Behandlungsvorrichtung ist einem Vakuum aussetzbar, um den Trocknungsvorgang auszuführen oder zu beschleunigen. Diesbezüglich kann eine Kopplung der Behandlungsvorrichtung mit einem Vakuumgefäß vorgenommen werden oder ein Anschluss entsprechender Vakuumpumpen erfolgen.

Zur Vermeidung von Trocknungs- oder Verdichtungsrändern auf dem Behandlungsgut erfolgt die Feuchteabgabe durch intervallartiges Druckbeaufschlagen der Kissen oder Schläuche gesteuert.

Zur Einschränkung negativer Wirkungen von Verdunstungskälte beim Trocknungsvorgang kann mit Hilfe der Kissen oder Schläuche und dem Temperiermedium eine thermische Stabilisierung erfolgen.
Die Erfindung soll nachstehend anhand von Ausführungsbeispielen näher erläutert werden.

Bei der Behandlung von Warmfleisch wird selbiges unmittelbar nach dem Schlachtvorgang warm zerlegt. Die portionierten Teile können dann vakuumverpackt werden, wobei diesbezüglich die Nutzung der Folienbehältnisse mit Rückstellkräfte ergebenden Materialeigenschaften erfolgt.

Möglicherweise aus dem Behandlungsgut austretende geringe Flüssigkeitsmengen verteilen sich gleichmäßig über die gesamte Produktoberfläche.

Durch die Zugabe von oxidationshemmenden Stoffen, insbesondere von Rosmarinextrakt auf das zu verpackende Produkt und zusätzlichen antimikrobiellen Mitteln, insbesondere Silberionen auf der Innenseite der Verpackungsfolie kann die durch die länger anhaltende höhere Temperatur zu erwartende Oxidation bzw. Keimbelastung verringert werden.

Die erfindungsgemäß einzusetzende Folie schmiegt sich beständig eng an das verpackte Lebensmittel an. Werden diesbezüglich antimikrobiell ausgerüstete Folien eingesetzt, kann ein unerwünschtes Wachstum von Mikroorganismen deutlich reduziert bzw. verhindert werden. Die eingesetzte Folie verhindert im Übrigen durch ihr enges vollflächiges Anlegen die Bildung von unerwünschten Gas- und Feuchtigkeitsblasen, die den Kontakt zwischen Folie und Lebensmittel unterbrechen.

Eine weitere Zugabe von CO₂ schränkt die Lebensbedingungen von Mikroorganismen ein, da sich auf der Produktoberfläche ein saures Milieu einstellt.

Die eingesetzte Behandlungsvorrichtung wird je nach Bedarf, d.h. nach den Eigenschaften der zu behandelnden Produkte entsprechend ausgekleidet, um einen gleichmäßig einwirkenden Druck bzw. die gezielte und gesteuerte Temperatureinwirkung auf das Behandlungsgut zu bewerkstelligen. Diesbezüglich sind die dem Behandlungsgut zugewandten Seiten entsprechender Behältnisse mit Kissen, Schläuchen, Taschen oder Ähnlichem aus einem hochflexiblen Folienmaterial bestückt und es sind Mittel zum Ein- und Auslassen des Druckmediums sowie zur Temperierung vorhanden.

Ein nach dem erfindungsgemäßen Verfahren behandeltes Fleischprodukt konnte vier Tage nach der Schlachtung verprobt werden. Die Verprobung gab überraschend positive Beurteilungen.

Eine Vergleichsprobe, die konventionell hängend gekühlt wurde, war zu dem genannten Zeitpunkt nach Aussage der Probanden ungenießbar.

Neben Braten- und Kochfleisch wurde Verarbeitungsfleisch der erfindungsgemäßen Druck- und Temperaturbehandlung unterzogen. Auch dieses Fleisch wies Eigenschaften eines warm angesalzenen Fleisches auf.

Durch Einlassen des Druckmediums in die das Fleisch umgebenden flexiblen Folienkissen oder Folienschläuche schmiegen sich diese unabhängig davon, wie das Fleisch ursprünglich geformt ist, fest an das Behandlungsgut an und es kann dann ein sehr gleichmäßig wirkender Druck aufgebaut werden.

Wenn es sich beim Behandlungsgut um Warmfleisch handelt, kann durch eine bis zum Eintritt des Rigor mortis andauernde Druckbehandlung verhindert werden, dass sich durch Muskelkontraktion der Muskelquerschnitt ändert und das Fleisch zäh wird.

Durch temperierte Druckmedien ist es möglich, die Temperatur des Behandlungsguts zu beeinflussen. Insbesondere Warmfleisch kann in einem vorgegebenen Temperaturbereich, bevorzugt zwischen 14°C und 16°C, gehalten werden, innerhalb dessen eine Muskelkontraktion nicht oder nur minimal erfolgt. Nach Einritt des Rigor mortis wird das warme Druckbehandlungsmedium durch ein Kühlmedium ausgetauscht, wodurch das Behandlungsgut sehr schnell und effektiv auf die gewünschte Temperatur gekühlt oder - falls erforderlich - gefroren werden kann.

Es wird bei diesem Ausführungsbeispiel der Zartheitsgrad von Warmfleisch durch druckmechanische und gleichzeitige thermische Behandlung während des Zeitraums vor Eintritt des Rigor mortis positiv beeinflusst.

Bei der Herstellung von Wurst- und Fleischwaren ist die Einhaltung definierter Formen wünschenswert oder unter Verkaufsaspekten sogar zwingend erforderlich. Diesbezüglich bietet es sich unterstützend an, die eingesetzten Kissen, Schläuche oder dergleichen auf der dem Behandlungsgut zugewandten Seite mit starren Formflächen, z.B. Ausformungen und/oder zur Anwendung einer ohmschen Erwärmung mit leitenden Materialien zu bestücken, die z.B. eine Halbschalenform, die Form geriffelter Scheiben oder eine andere geometrische Gestalt besitzen können.

Über den aufzubringenden Druck in den Kissen, Schläuchen oder dergleichen Gebilden kann das gegebenenfalls in einer Folie oder Darm verpackte, aber auch ein unverpacktes Behandlungsgut in der entsprechend gewünschten Form stabilisiert werden. Durch die gezielte Temperierung des Druckmediums ist auch bei diesem Ausführungsbeispiel eine kombinierte Anwendung von Druck und Temperatur bzw. Kälte möglich.

Halbfertigwaren können unter Druck u.a. mittels der erwähnten ohmschen Erwärmung aber auch durch ein erhitztes Tempermedium in den Kissen, Schläuchen oder dergleichen Gebilden temperiert, d.h. gegart werden und weisen nach einer derartigen Kombinationsbehandlung einen verfestigten Biss auf. Nach dem diesbezüglichen Temperiervorgang ist es z.B. möglich, durch Veränderung der Temperatur des Druckmediums das Behandlungsgut zu kühlen.

Ein bei bekannten Verfahren bisher üblicher Transport des Behandlungsguts zu diversen Bearbeitungsorten kann entfallen. Die Gefahr der Rekontamination während des Produktionsprozesses ist extrem eingeschränkt.

Das hier vorgestellte Verfahren eignet sich auch für die Produktion von Kochpökelwaren, wie z. B. von Kochschinken.

Bei der Rohwurstbehandlung kann ein noch nicht verdichtetes Brät zwischen zwei Folien in eine Pressform verbracht und durch einen Stempel verdichtet werden.

Eine derartige Pressform kann mit den erfindungsgemäßen Kissen oder Schläuchen bestückt werden, die diesbezüglich auch die Funktion der Druckaufbringung übernehmen.

Auf der dem Behandlungsgut zugewandten Seite dieser Kissen oder Schläuche möglicherweise aufgebrachte Ausformungen dienen der Formgebung des Bräts oder aber auch der zumindest zeitweisen Erwärmung des Gutes durch ein erhitztes Tempermedium in den Kissen, Schläuchen oder dergleichen Gebilden oder ohmsche Erhitzung.

Nachdem das unverpackte, zwischen den Folien oder Därmen gefüllte Rohmaterial in der weitergebildeten Pressform verdichtet wurde, kann die für den Reifevorgang erforderliche Temperierung über das unter Druck stehende Medium so lange erfolgen, bis der isoelektrische Punkt durch Absäuerung des Behandlungsguts erreicht ist, ab dem eine weitere Trocknung erfolgen muss, damit die zur Stabilisierung des Produkts erforderliche a_{w}-Wertabsenkung erfolgt.

Der Trocknungsvorgang kann hier durch den Einsatz von Adsorbentien vorgenommen werden.

Durch Druckreduzierung bildet sich ein Abstand zwischen den Oberflächen der Kissen oder Schläuche und dem Behandlungsgut aus, so dass eine Vakuumtrocknung möglich wird.

Diesbezüglich ist es zweckmäßig, die Pressform in einen mit Vakuum beaufschlagbaren Behälter anzuordnen, der mit trockenen Adsorbentien befüllt ist oder mit solchen in Verbindung steht.

Bei entsprechender Aktivierung setzt sich ein zügiger Abtrocknungsprozess in Gang. Der Abtrocknungsprozess ist durch Steuerung des Vakuums und Temperierung des Behandlungsguts beeinflussbar.

Da die eingesetzten Adsorbentien stark hygroskopisch sind, nehmen sie selektiv Wasser auf, was selbige für den Einsatz bei der Trocknung von Lebensmitteln prädestiniert.

Aufgrund der schnellen Abtrocknung der Rohprodukte kann beginnend an der Oberfläche des Behandlungsguts eine Temperaturabsenkung eintreten. Damit die biochemischen Vorgänge im Behandlungsgut nicht durch eine zu starke Temperaturabsenkung gestört werden, kann erfindungsgemäß eine regelmäßige Temperaturanhebung während der Trocknungsphase erfolgen. Zu diesem Zweck werden die Folienkissen oder -schläuche dann mit entsprechend temperiertem Druckmedium befüllt.

Es ist bekannt, dass durch eine starke Trocknung an der Oberfläche des jeweiligen Behandlungsguts ein sogenannter Trockenrand oder Verdichtungsrand entstehen kann, der eine gleichmäßige weitere Wasserabgabe behindert.

Durch ein intervallartiges Anlegen der Kontaktflächen an die Oberfläche des Behandlungsguts wird die Wasserabgabe unterbrochen und es kann sich innerhalb des unter Druck stehenden Behandlungsguts ein Gleichgewicht des a_{w}-Wertes einstellen. Diese Prozessfolge wird so lange, eventuell bei sinkenden Vorgabetemperatur wiederholt, bis der Reife- und Abtrocknungsvorgang des Produkts abgeschlossen ist.

Der Abtransport des Wasserdampfs von der Oberfläche des Behandlungsguts zu den Adsorbentien im Adsorber kann durch mechanische Umwälzung des im System vorhandenen Gases bei zwangsweisem Durchströmen des Adsorbers optimiert werden.

Dabei besteht die Möglichkeit, die Trocknungsgeschwindigkeit des Behandlungsguts über die Strömungsgeschwindigkeit des Gases zu beeinflussen und zu regeln. Durch den Einsatz geeigneter, an den Stirnseiten abgeflachter Pressformen können die bei Aufschnittswaren ansonsten gegebenen Kappenverluste verringert werden.

Die im Ausführungsbeispiel beschriebene Behandlungsmethode ist nicht nur für Rohwurstprodukte, sondern auch für Rohpökelware nutzbar.

Um den Trocknungsprozess nicht zu verzögern, kann bei einer Ausführungsform der Erfindung die Möglichkeit bestehen, die eingesetzten Adsorbentien zu kühlen.

Sofern die Druckmedien in den Folienkissen oder Folienschläuchen oder dergleichen Gebilden in direktem Kontakt mit Kühlschlangen des Adsorbers stehen, kann die Abwärme der Adsorbentien, gegebenenfalls zwischengepuffert, zum Erwärmen des Behandlungsguts und die entstehende Verdunstungskälte an der Oberfläche des Behandlungsguts eventuell ebenfalls zwischengepuffert zum Kühlen der Adsorbentien genutzt werden. Ein derartiger Kreislauf des Druckmediums kann den Einsatz zusätzlicher Energien reduzieren und erhöht den Wirkungsgrad einer diesbezüglichen Vorrichtung.

Nach dem Erreichen des isoelektrischen Punktes, d.h. einer hohen Wasserabgabebereitschaft des Behandlungsguts, wird dafür gesorgt, dass der Trocknungsvorgang zur Vermeidung von Trockenrändern überschaubar vonstatten geht. Unabhängig von den möglichen Unterbrechungen des Trockenvorgangs durch kurzfristiges Anlegen der Kissen oder Schläuche an die Produktoberfläche, kann über Strahlungswärme ein zu starkes Abkühlen des Behandlungsguts vermieden werden.

Diesbezüglich sind die Kissen oder Schläuche von temperierten Druckmedien durchströmbar und es ist der Abstand zum Behandlungsgut so gewählt, dass Feuchtigkeit abgeführt und Strahlungswärme zugeführt werden kann.

Während der Passage des Druckmediums durch die Kissen oder Schläuche wird das durch die Adsorbentien erwärmte Medium gekühlt und kann im Kreislaufverfahren wieder zur Kühlung der Adsorbentien genutzt werden.

Der vorgenannte Trocknungsschritt kann auch unter Hochvakuum durchgeführt werden.

Die in den Ausführungsbeispielen erwähnten Mittel zum Druckaufbau, zur Temperierung und zur Trocknung können mit am Markt befindlichen Spindelkoch-Reifepressen unter Zuhilfenahme von Ventilatoren, aber auch unter Hochvakuum oder Vakuumbehältern kombiniert werden. Es kann hierbei der grundsätzliche Aufbau bereits handelsüblicher Pressen erhalten bleiben, wobei lediglich die erfindungsgemäßen Komponenten hinzuzufügen sind.

Es hat sich überraschend gezeigt, dass durch das Hinzufügen von CO₂ die Verarbeitungseigenschaft von Warmfleisch für die Produktion von Roh- und Dauerwaren durch eine schnelle Absäuerung und ausgeprägter Farbgebung unterstützt wird.

Ebenfalls überraschend ergaben sich infolge der Behandlung von Suppenfleisch nach der erfindungsgemäßen Lehre ein höherer Zartheitsgrad und eine deutlich spürbare höhere Saftigkeit.

Generell hat sich herausgestellt, dass sich der Zartheitsgrad und die Wasserbindefähigkeit nicht nur von Frischfleisch für den Ladenverkauf, sondern auch von Verarbeitungsfleisch durch die Druck- und Temperaturbehandlung zur Einschränkung des Shortening-Effekts erhöht, was den aus diesem Rohmaterial produzierten Fertigprodukten deutlich anzumerken ist.

## Patentansprüche

1. Verfahren zur Erhöhung der Produktqualität und Produktsicherheit von Fleisch oder Lebensmitteln tierischen oder pflanzlichen Ursprungs mittels gezielter Druck- und gleichzeitiger Temperaturbehandlung gemäß folgenden Schritten:
- portioniertes Verpacken von Frisch- oder Warmfleisch beliebiger Form, auch bis hin zu ganzen oder Teilen von Tierkörpern, unter Nutzung eines Folienbehältnisses, welches über Rückstellkräfte verfügt, so dass das Austreten von Flüssigkeit extrem reduziert wird und evtl. noch aus dem verpackten Gut austretende Flüssigkeit sich über die Oberfläche des Gutes verteilt;
- Einbringen der in die Folienbehältnisse verpackten Portionen in eine behältnisartige Behandlungsvorrichtung, welche an den mit dem Gut in Kontakt gelangenden Flächen eine Vielzahl von mit einem Druck- und Temperiermedium beaufschlagbaren formfreien oder formgebenden Gebilden verfügt;
- Füllen der formfreien oder formgebenden Gebilde mit dem Druck- und Temperiermedium derart, dass auf das verpackte Gut im Wesentlichen gleichmäßige Druckkräfte einwirken, und Halten des verpackten Gutes in einem vorgegebenen Temperaturbereich von ca. 14°C bis 16°C über ein vorbestimmtes Zeitfenster sowie
- nach Ablauf des vorbestimmten Zeitfensters mögliches schnelles Kühlen des verpackten Gutes durch Austausch des Temperiermediums.

2. Verfahren nach Anspruch 1,
**dadurch gekennzeichnet, dass**
dem verpackten Gut oxidationshemmende Stoffe zugeführt werden.

3. Verfahren nach Anspruch 2,
**dadurch gekennzeichnet, dass**
das jeweilige Folienbehältnis über eine antimikrobielle Beschichtung oder Oberfläche verfügt.

4. Verfahren nach einem der vorangegangenen Ansprüche,
**dadurch gekennzeichnet, dass**
eine Zugabe von oder Begasung mit CO₂ erfolgt.

5. Verfahren nach einem der vorangegangenen Ansprüche,
**dadurch gekennzeichnet, dass**
bei der Behandlung von Warmfleisch das vorbestimmte oder über den pH-Wert Verlauf zu ermittelnde Zeitfenster bis zum Eintreten der Muskelstarre gehalten wird.

6. Verfahren nach einem der Ansprüche 1 bis 5,
**dadurch gekennzeichnet, dass**
den zur Verarbeitung zu Wurst- und Fleischwaren bestimmten Rohstoffen während des nachfolgenden Verarbeitungsprozesses keine wasserbinden Stoffe wie z. B. Phosphat oder auch Milcheiweiß zugesetzt werden.

7. Verfahren nach einem der Ansprüche 1 bis 6,
**dadurch gekennzeichnet, dass**
bei der Herstellung von Wurst- und Fleischwaren, welche über eine definierte Form verfügen sollen, die Gebilde auf der dem Behandlungsgut zugewandten Seite mit Formflächen versehen sind, welche das Behandlungsgut in eine von den Formflächen bestimmte Gestalt überführen.

8. Verfahren nach Anspruch 7,
**dadurch gekennzeichnet, dass**
die Formflächen zum Einwirken thermischer Energie auf das Behandlungsgut ausgebildet und insbesondere zur Erzeugung ohmscher Wärme vorgesehen sind.

9. Verfahren nach einem der Ansprüche 1 bis 4,
**dadurch gekennzeichnet, dass**
bei der Rohwurstbehandlung der vorgegebene Temperaturbereich auf den Trocknungs- und Reifeprozess des Behandlungsguts abgestellt ist.

10. Verfahren nach Anspruch 9,
**dadurch gekennzeichnet, dass**
die Trocknung des Behandlungsguts unter Einsatz von Adsorbentien erfolgt und diesbezüglich das Ausgangsprodukt in einem gasdurchlässigen Folienbehältnis oder unverpackt vorliegt.

11. Verfahren nach Anspruch 9 oder 10,
**dadurch gekennzeichnet, dass**
die behältnisartige Behandlungsvorrichtung einem Vakuum aussetzbar ist, um den Trocknungsvorgang auszuführen oder zu beschleunigen.

12. Verfahren nach einem der Ansprüche 9 bis 11,
**dadurch gekennzeichnet, dass**
zur Vermeidung von Trocknungs- oder Verdichtungsrändern auf dem Behandlungsgut die Feuchteabgabe durch intervallartiges Druckbeaufschlagen gesteuert erfolgt.

13. Verfahren nach einem der Ansprüche 9 bis 12,
**dadurch gekennzeichnet, dass**
zur Einschränkung negativer Wirkungen von Verdunstungskälte beim Trocknungsvorgang mittels der Gebilde und dem Temperiermedium eine thermische Stabilisierung vorgenommen wird.

14. Verfahren nach einem der vorangegangenen Ansprüche,
**dadurch gekennzeichnet, dass**
eine kombinierte Druck-Temperaturbehandlung ganzer, halber, geviertelter oder kleiner Einheiten von Tierkörpern mit und ohne Knochen erfolgt, die bei Bedarf zum Schutz vor möglicher Kontamination von einem Berührungsschutz umhüllt sind.

15. Verfahren nach einem der vorangehenden Ansprüche,
**dadurch gekennzeichnet, dass**
die Gebilde als elastische Gebilde, beispielsweise in Form von Kissen oder Schläuche ausgeführt sind oder von starren Gebilden ausgegangen wird, die das Behandlungsgut aufnehmen und eine Abdeckung besitzen, um gleichzeitig eine gewünschte Geometrie des Produktes zu erhalten.

## Claims

1. Method for enhancing the product quality and product safety of meat or foodstuffs of animal or vegetable origin by means of a selective pressure treatment and concurrent temperature treatment according to the following steps:
- packaging fresh or warm meat of arbitrary shape, even up to entire animal bodies or parts thereof, in a portioned manner, using a film container which has restoring forces so that the escape of liquid is extremely reduced and liquid possibly still escaping from the packaged product is distributed over the surface of the product;
- introducing the portions packaged in the film containers in a container-like treatment apparatus which comprises on surfaces coming into contact with the product a plurality of shapeless or shaping structures to which a pressure and temperature control medium can be applied,
- filling the shapeless or shaping structures with the pressure and temperature control medium such that substantially uniform compressive forces act upon the packaged product and keeping the packaged product in a predefined temperature range form approximately 14°C to 16°C during a predetermined time window, and
- upon expiry of the predetermined time window, cooling the packaged product as rapidly as possible by exchanging the temperature control medium.

2. Method according to claim 1,
**characterized in that**
oxidation-inhibiting substances are added to the packaged product.

3. Method according to claim 2,
**characterized in that**
the respective film container has an antimicrobial coating or surface.

4. Method according to anyone of the preceding claims,
**characterized in that**
an addition of or gassing with CO₂ is performed.

5. Method according to anyone of the preceding claims,
**characterized in that**
during the treatment of warm meat, the time window, that is predetermined or to be determined on the basis of the progress of the pH value, is kept until the occurrence of muscular rigidity.

6. Method according to anyone of claims 1 to 5,
**characterized in that**
during the subsequent treatment process, no water-binding substances such as e.g. phosphate or else lactoprotein are added to the raw substances intended to be processed into sausage or meat products.

7. Method according to anyone of claims 1 to 6,
**characterized in that**
during the production of sausage or meat products which are intended to have a defined shape, the structures on the side facing the product to be treated are provided with shaping surfaces which transfer the product to be treated into a shape determined by the shaping surfaces.

8. Method according to claim 7,
**characterized in that**
the shaping surfaces are configured to have thermal energy act upon the product to be treated and in particular provided to generate ohmic heat.

9. Method according to anyone of claims 1 to 4,
**characterized in that**
during the raw sausage treatment, the predefined temperature range is adjusted to the drying and maturing process of the product to be treated.

10. Method according to claim 9,
**characterized in that**
the drying of the product to be treated is realized by using adsorbents, and the starting product is in this respect present in a gas-permeable film container or unpackaged.

11. Method according to claim 9 or 10,
**characterized in that**
the container-like treatment apparatus can be exposed to a vacuum so as to carry out or accelerate the drying process.

12. Method according to anyone of claims 9 to 11,
**characterized in that**,
in order to avoid drying marks or compression marks on the product to be treated, moisture is discharged in a controlled manner by applying pressure in an interval type manner.

13. Method according to anyone of claims 9 to 12,
**characterized in that**,
in order to limit negative effects of cold due to evaporation during the drying process, a thermal stabilization is performed by the structures and the temperature control medium.

14. Method according to anyone of the preceding claims,
**characterized in that**
a combined pressure and temperature treatment of entire, half, quartered or small units of animal bodies, with or without bones, is performed, which are enveloped by a touch protection, if required, to protect them against possible contamination.

15. Method according to anyone of the preceding claims,
**characterized in that**
the structures are realized as elastic structures, for instance in the form of pads or tubes, or rigid structures are taken as a basis, which receive the product to be treated and have a covering so as to obtain at the same time a desired geometry of the product.

## Revendications

1. Procédé pour augmenter la qualité et la sécurité des produits carnés ou des produits alimentaires d'origine animale ou végétale au moyen d'un traitement ciblé sous pression et simultanément en température selon les étapes suivantes :
- on emballe par portions de la viande froide ou chaude sous forme quelconque, également jusqu'à des corps animaux entiers ou en partie, en utilisant un récipient sous forme de feuille, lequel dispose de forces de rappel, de telle façon que l'échappement de liquide est extrêmement réduit et que des liquides qui s'échappent éventuellement encore du produit emballé se répartissent sur la surface du produit ;
- on introduit les portions emballées dans les récipients en forme de feuille dans un dispositif de traitement semblable à un conteneur, qui dispose au niveau des surfaces venant en contact avec les produits d'une pluralité de structures dépourvues de forme ou aptes à conférer une forme, ces structures étant sollicitées avec un fluide sous pression et de températion ;
- on remplit les structures dépourvues de forme ou aptes à conférer une forme avec le fluide sous pression et de températion de telle façon que des forces de compression sensiblement régulières agissent sur le produit emballé, et on maintient le produit emballé dans une plage de température prédéterminée d'environ 14°C à 16°C sur une fenêtre temporelle prédéterminée, et
- après expiration de la fenêtre temporelle prédéterminée, le cas échéant on refroidit rapidement le produit emballé par échange du fluide de températion.

2. Procédé selon la revendication 1,
**caractérisé en ce que** des agents bloquant l'oxydation sont ajoutés au produit emballé.

3. Procédé selon la revendication 2,
**caractérisé en ce que** le récipient respectif en forme de feuille dispose d'un revêtement ou d'une surface antimicrobien(ne).

4. Procédé selon l'une des revendications précédentes,
**caractérisé en ce qu'**il inclut un apport de CO₂ ou le maintien sous atmosphère de CO₂.

5. Procédé selon l'une des revendications précédentes,
**caractérisé en ce que** lors du traitement de viande chaude, la fenêtre temporelle prédéterminée ou la fenêtre temporelle à déterminer via l'évolution de la valeur du pH est maintenue jusqu'à apparition de la raideur musculaire.

6. Procédé selon l'une des revendications 1 à 5,
**caractérisé en ce que** l'on n'ajoute aucun agent liant vis-à-vis de l'eau, comme par exemple des phosphates ou encore de l'albumine lactée aux matières premières destinées au traitement pour donner des produits de charcuterie et des produits carnés pendant le processus de traitement successif.

7. Procédé selon l'une des revendications 1 à 6,
**caractérisé en ce que**, lors de la fabrication de produits de charcuterie et de produits carnés, qui doivent disposer d'une forme définie, les structures sont dotées, sur le côté tourné vers les produits à traiter, de surfaces de mise en forme qui convertissent le produit à traiter dans une conformation déterminée par les surfaces de mise en forme.

8. Procédé selon la revendication 7,
**caractérisé en ce que** les surfaces de mise en forme sont réalisées pour l'application d'énergie thermique sur les produits à traiter et sont en particulier prévues pour engendrer une chaleur ohmique.

9. Procédé selon l'une des revendications 1 à 4,
**caractérisé en ce que** lors du traitement de produits de charcuterie crue, la plage de température prédéterminée est accordée au processus de séchage et de maturation du produit à traiter.

10. Procédé selon la revendication 9,
**caractérisé en ce que** le séchage du produit à traiter a lieu en employant des agents absorbants et qu'à cet effet le produit de départ se présente dans un récipient en forme de feuille perméable aux gaz ou de façon non emballée.

11. Procédé selon la revendication 9 ou 10,
**caractérisé en ce que** le dispositif de traitement semblable à un récipient est susceptible d'être exposé à un vide afin d'effectuer ou d'accélérer le processus de séchage.

12. Procédé selon l'une des revendications 9 à 11,
**caractérisé en ce que**, pour éviter des modifications par séchage ou par compactage sur le produit à traiter, la diffusion d'humidité a lieu de façon commandée par application de pression par intervalles.

13. Procédé selon l'une des revendications 9 à 12, **caractérisé en ce que**, pour limiter des effets négatifs d'un refroidissement par évaporation lors du processus de séchage, on procède à une stabilisation thermique au moyen des structures et du fluide de températion.

14. Procédé selon l'une des revendications précédentes,
**caractérisé en ce qu'**on procède à un traitement combiné sous pression et sous température, de corps animaux sous forme d'unités entières, de moitiés, de quarts ou d'unités plus petites avec ou sans os, qui sont en cas de besoin enveloppées par une protection anti contact pour la protection vis-à-vis de contaminations éventuelles.

15. Procédé selon l'une des revendications précédentes,
**caractérisé en ce que** les structures sont réalisées sous forme de structures élastiques, par exemple sous la forme de coussins ou de tuyaux souples, ou **en ce que** l'on utilise des structures rigides qui reçoivent le produit à traiter et possèdent une couverture afin d'obtenir simultanément une géométrie souhaitée du produit.
